# EUROPEAN PATENT SPECIFICATION

(11) **EP 0 696 701 B1**
(45) Date of publication and mention of the grant of the patent: **30.12.1998**
(21) Application number: 95112113.6
(22) Date of filing: 02.08.1995
(51) Int. Cl.: F16L 21/03

(54) **A sealing ring device**
Dichtring
Anneau d'étanchement

(30) Priority: 09.08.1994 SE 9402678
(43) Date of publication of application: 14.02.1996
(73) Proprietor: Forsheda AB, S-330 12 Forsheda (SE)
(72) Inventor: Neumann, Wieland, D-4050 Mönchengladbach 1 (DE)
(74) Representative: Linde, Leif

(56) References cited:
- EP-A- 0 011 919
- WO-A-94/11666

## Description

The present invention relates to a sealing ring device, the sealing ring being of the kind which is adapted to be moulded into a socket of a concrete pipe at an inner, substantially cylindrical surface of the socket.

The moulding of a sealing ring into a concrete pipe socket takes place in connection with the moulding of the concrete pipe. The sealing ring is positioned on a substantially cylindrical surface of an annular part of the mould, whereby the sealing ring will be moulded into the socket in the intended position therein when the concrete is supplied to the mould. The sealing ring has surfaces contacting each other which are adapted to slide along each other when a spigot end is introduced into the socket for establishing a pipe joint constituted by the socket and the spigot end and sealed by the sealing ring.

When the sealing ring is moulded into the socket in connection with the moulding of the concrete pipe, the sealing ring is subjected to forces from the concrete which is supplied to the mould, and it can thereby easily happen that the sealing ring is displaced from its correct position on the cylindrical surface of the annular mould portion by being axially displaced downwardly along said cylindrical surface. It is realized that the sealing ring will thereby take an incorrect moulded-in position in the socket which in turn provides that the sealing ring can not comply with its intended object of sealing the joint between the socket and a spigot end introduced into the socket.

The object of the invention is to provide a sealing ring device, whereby the drawbacks relating to the changed position of the sealing ring during the moulding-in operation into the socket are obviated.

In order to comply with this object the sealing ring device according to the invention is characterized in that the sealing ring is at the surfaces contacting each other provided with engagement means adapted to prevent or obstruct sliding of the surfaces in relation to each other in order prevent or obstruct undesirable changes of the position of the sealing ring in the mould as a consequence of influence from concrete supplied to the mould.

In the case that the sealing ring is of a kind comprising a compression portion and a sliding skin formed as a pocket the engagement means are preferably positioned at inner surfaces of the pocket formed by the sliding skin, said surfaces contacting each other, and the engagement means are preferably positioned at a portion of the sliding skin positioned radially inside the compression portion.

The engagement means are preferably constituted by radially directed engagement surfaces facing each other and positioned for example on annular beads.

In the case that the sealing ring has a sliding skin it is suitable that the engagement means are positioned at the inner surfaces of the sliding skin contacting each other in such a way that the engagement means are displaced from engagement with each other when the spigot end is introduced into the socket. This displacement of the engagement means to an inactive position is provided by the fact that the sliding skin is deflected outwardly in front of the spigot end so that the engagement means do not prevent the introduction of the spigot end into the socket.

An embodiment of the device according to the invention shall be described in the following with reference to the accompanying drawings.

Fig. 1 is a section of a sealing ring provided with a device according to the invention.

Fig. 2 illustrates the sealing ring provided with the device according to the invention tensioned onto a bottom ring constituting a portion of a mould for moulding a concrete pipe which shall be provided with a socket into which the sealing ring shall be moulded.

Fig. 3 illustrates the introduction of a spigot end into a socket into which a sealing ring provided with a device according to the invention has been moulded.

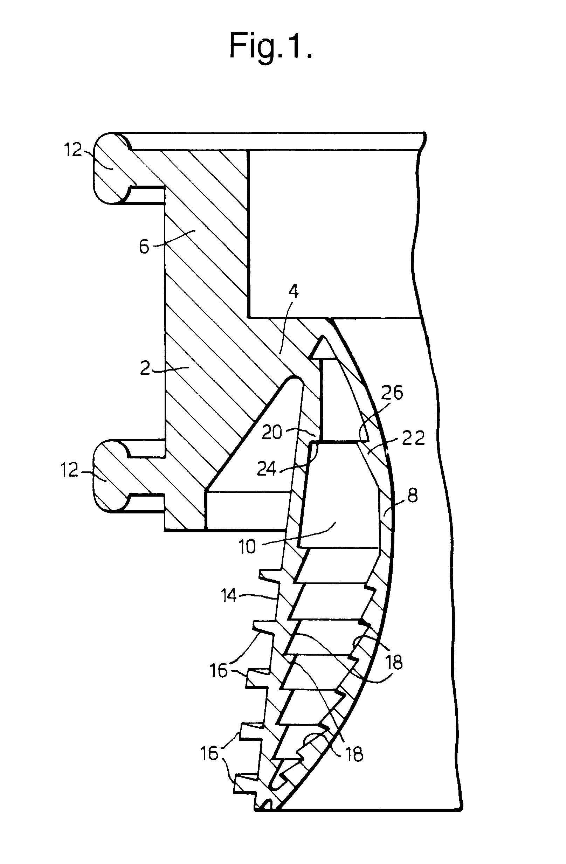

In Fig. 1 there is shown an axial section of a sealing ring provided with a device according to the invention. The sealing ring is intended to be moulded into a concrete pipe socket for sealing the annular space between the substantially cylindrical inner surface of the socket and the outer surface of a spigot end of a connecting concrete pipe, introduced into the socket. The sealing ring consists of a main body 2 having a compression portion 4 and a support portion 6 and a pocket 10 constituted by a thin sliding skin 8. The sliding skin 8 is at one edge thereof connected with the radially inner portion of the compression portion of the main body 2 and forms a closed space.

The main body 2 has radially outwardly directed, annular retainer portions 12 which are adapted to secure the retaining of the sealing ring in the concrete in the moulded-in position of the sealing ring. At its radially outer surface 14 the sliding skin 8 has a number of annular retainer elements 16 which are adapted to be moulded into the concrete material of the socket so as to retain the sliding skin in a correct position in the socket prior to the pipe jointing operation. In the pocket 10 the sliding skin 8 forms a number of hook-shaped projections 18 extending so that they do substantially not prevent sliding of the surfaces of the sliding skin contacting each other in the direction in which the surfaces slide when the spigot end is introduced into the socket but, however, act for obstructing sliding in the opposite direction in order to prevent withdrawal of the spigot end from the socket.

At its portion positioned radially inside the compression portion 4 the sliding skin 8 has small cooperating bead-shaped projections 20 and 22 which are adapted to engage each other by means of radially extending surfaces 24 and 26, respectively. Thus, the surfaces 24 and 26 are positioned so that they prevent or obstruct sliding of the surfaces of the sliding skin in a direction opposite to the direction in which sliding is prevented or obstructed by the hook-shaped projections 18.

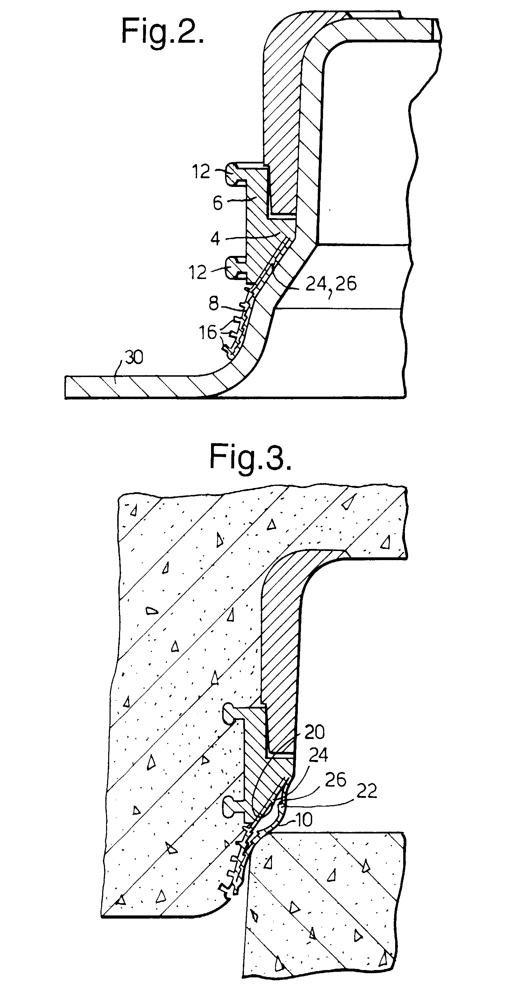

Fig. 2 illustrates the sealing ring provided with a device according to the invention, tensioned onto a bottom ring 30 which constitutes a part of a mould for moulding a concrete pipe and also for moulding the sealing ring into the socket of the concrete pipe. When the concrete pipe is moulded concrete is supplied to the mould. This operation might have such an influence on the sealing ring tensioned onto the bottom ring 30 that the correct position of the sealing ring in the mould is changed and the sealing ring takes an improper moulded-in position in the socket.

This is prevented by the presence of the device according to the invention which is constituted by the engagement means constituted by the bead-shaped projections 20 and 22 which because of the engagement between the facing surfaces 24 and 26 prevent that the sealing ring is displaced axially downwards on the bottom ring when the concrete is supplied to the mould.

It is realized that the engagement means according to the invention can be designed in many different ways within the scope of the invention. For example the engagement means can be constituted by several bead-shaped projections and the engagement means can be designed in another way than the design of the embodiment shown in the drawings.

In Fig. 3 there is illustrated that the engagement means according to the invention do not prevent or obstruct the introduction of the spigot end into the socket provided with the sealing ring when the pipe joint is established. Thus, the engagement means constituted by the bead-shaped projections 20 and 22 will at the initial stage of the introduction of the spigot end into the socket be displaced out of engagement with each other by the fact that the portion of the sliding skin 8 supporting the bead-shaped projection 22 is deflected radially inwards in front of the spigot end when this is introduced into the socket.

## Claims

1. A sealing ring device, the sealing ring being adapted to be moulded into a socket of a concrete pipe at an inner, substantially cylindrical surface of the socket by positioning the sealing ring on a substantially cylindrical, annular portion (30) of a mould and supplying concrete to the mould, the sealing ring having surfaces contacting each other and adapted to slide along each other when the spigot end is introduced into the socket for establishing a pipe joint constituted by the socket and the spigot end and sealed by the sealing ring, **characterized** in that the sealing ring is at the surfaces contacting each other provided with engagement means (24, 26) adapted to prevent or obstruct sliding of the surfaces in relation to each other in order to prevent or obstruct undesired positional changes of the sealing ring in the mould as a consequence of an influence from the concrete supplied to the mould.

2. A device as claimed in claim 1, wherein a sealing ring has a compression portion (4) and a sliding skin (8) formed as a pocket, **characterized** in that the engagement means (24, 26) are positioned at inner surfaces of the pocket formed by the sliding skin, said surfaces contacting each other.

3. A device as claimed in claim 2, **characterized** in that the engagement means (24, 26) are positioned at a portion of the sliding skin (8) positioned radially inside the compression portion (4).

4. A device as claimed in any of the preceding claims, **characterized** in that the engagement means are constituted by radially directed engagement surfaces (24, 26) facing each other.

5. A device as claimed in claim 4, **characterized** in that the engagement surfaces are positioned on annular beads (20, 22).

6. A device as claimed in any of the preceding claims, **characterized** in that the engagement means (24, 26) are adapted to be displaced out of engagement with each other as a consequence of the introduction of the spigot end into the socket.

7. A device as claimed in claim 6, **characterized** in that the surfaces of the sealing ring contacting each other are within the portions at which the engagement means (24, 26) are positioned adapted at the initial stage of the introduction of the spigot end into the socket to be displaced in radial direction from each other for displacing the engagement means (24, 26) out of engagement with each other.

8. A device as claimed in claim 7, wherein the engagement means (24, 26) are positioned at inner surfaces engaging each other of a pocket (10) formed by a sliding skin (8), **characterized** in that the engagement means (24, 26) are adapted to be displaced out of engagement with each other by deflection of the sliding skin (8) when the spigot end is introduced into the socket.

## Patentansprüche

1. Dichtringvorrichtung, wobei der Dichtring geeignet derart ausgestaltet ist, daß er ir eine Hülse eines Betonrohres an einer inneren, im wesentlichen zylindrischen Oberfläche der Hülse dadurch eingeformt wird, daß der Dichtring auf einem im wesentlichen zylindrischen, ringförmigen Teil (30) einer Form angeordnet und Beton der Form zugeführt wird, wobei der Dichtring Oberflächen hat, die einander berühren und entlang einander gleiten können, wenn das Zapfenende in die Hülse eingeführt wird, um eine Rohrverbindung zu schaffen, welche durch die Hülse und das Zapfenende aufgebaut und durch den Dichtring abgedichtet wird, **dadurch gekennzeichnet,** daß der Dichtring an den einander berührenden Oberflächen mit Eingriffmitteln (24, 26) versehen ist, die geeignet derart ausgestaltet sind, daß sie ein Gleiten der Oberflächen gegeneinander verhindern oder behindern, um unerwünschte Positionsveränderungen des Dichtungsringes in der Form als Folge eines Einflusses des der Form zugeführten Betons zu verhindern oder zu behindern.

2. Vorrichtung nach Anspruch 1, wobei ein Dichtungsring einen Kompressionsteil (4) und eine Gleithaut (8) hat, die wie eine Tasche gebildet ist, dadurch gekennzeichnet, daß die Eingriffmittel (24, 26) an inneren Oberflächen der durch die Gleithaut gebildeten Tasche angeordnet sind, wobei die Oberflächen einander berühren.

3. Vorrichtung nach Anspruch 2, dadurch gekennzeichnet, daß die Eingriffmittel (24, 26) an einem Teil der Gleithaut (8), der radial innerhalb des Kompressionsteils (4) angeordnet ist, angeordnet sind.

4. Vorrichtung nach einem der vorhergehenden Ansprüche, dadurch gekennzeichnet, daß die Eingriffmittel durch radial gerichtete Eingriffsoberflächen (24, 26), die einander zugerichtet sind, aufgebaut sind.

5. Vorrichtung nach Anspruch 4, dadurch gekennzeichnet, daß die Eingriffsoberflächen auf ringförmigen Wulsten (20, 22) angeordnet sind.

6. Vorrichtung nach einem der vorhergehenden Ansprüche, dadurch gekennzeichnet, daß die Eingriffmittel (24, 26) geeignet derart ausgestaltet sind, daß sie als Folge des Einführens des Zapfenendes in die Hülse hinein voneinander außer Eingriff gebracht werden können.

7. Vorrichtung nach Anspruch 6, dadurch gekennzeichnet, daß die Oberflächen des Dichtringes, die einander berühren, in denjenigen Teilen sind, bei welchen die Eingriffmittel (24, 26) angeordnet sind, mit geeigneter Ausgestaltung im Anfangszustand des Einführens des Zapfenendes in die Hülse hinein, um in radialer Richtung voneinander verschoben zu werden für das Verschieben der Eingriffmittel (24, 26) außer Eingriff voneinander.

8. Vorrichtung nach Anspruch 7, wobei die Eingriffmittel (24, 26) an inneren, miteinander in Eingriff befindlichen Oberflächen einer Tasche (10) angeordnet sind, welche durch eine Gleithaut (8) gebildet ist, dadurch gekennzeichnet, daß die Eingriffmittel (24, 26) geeignet derart ausgestaltet sind, daß sie durch Verbiegen bzw. Ablenken der Gleithaut (8) voneinander außer Eingriff verschoben werden, wenn das Zapfenende in die Hülse eingeführt wird.

## Revendications

1. Dispositif pour bague d'étanchéité, la bague d'étanchéité étant du type qui peut être moulé dans l'about femelle d'un tuyau en béton au niveau d'une surface intérieure sensiblement cylindrique de cet about femelle par positionnement de la bague d'étanchéité sur une partie annulaire (30), sensiblement cylindrique, d'un moule et envoi de béton dans le moule, la bague d'étanchéité ayant des surfaces en contact mutuel qui peuvent glisser l'une sur l'autre quand l'extrémité d'about mâle est introduite dans l'about femelle pour la réalisation d'une jonction de tuyaux formée par l'about femelle et l'extrémité d'about mâle et rendue étanche par la bague d'étanchéité, caractérisé en ce que la bague d'étanchéité comporte, au niveau de ses surfaces en contact mutuel, des moyens de mise en prise (24, 26) qui empêchent ou gênent le glissement des surfaces l'une par rapport à l'autre afin d'empêcher ou de gêner des modifications indésirables de position de la bague d'étanchéité dans le moule suite à l'influence du béton versé dans le moule.

2. Dispositif selon la revendication 1, dans lequel la bague d'étanchéité comprend une partie de compression (4) et une peau glissante (8) en forme de poche, caractérisé en ce que les moyens de mise en prise (24, 26) sont placés au niveau des surfaces intérieures de la poche formée par la peau glissante, lesdites surfaces étant en contact mutuel.

3. Dispositif selon la revendication 2, caractérisé en ce que les moyens de mise en prise (24, 26) sont placés au niveau d'une partie de la peau glissante (8) située radialement à l'intérieur de la partie de compression (4).

4. Dispositif selon l'une quelconque des revendications précédentes, caractérisé en ce que les moyens de mise en prise sont formés par des surfaces de mise en prise (24, 26) dirigées radialement et se faisant mutuellement face.

5. Dispositif selon la revendication 4, caractérisé en ce que les surfaces de mise en prise sont situées sur des moulures annulaires (20, 22).

6. Dispositif selon l'une quelconque des revendications précédentes, caractérisé en ce que les moyens de mise en prise (24, 26) peuvent être séparés l'un de l'autre en conséquence de l'introduction de l'extrémité d'about mâle dans l'about femelle.

7. Dispositif selon la revendication 6, caractérisé en ce que les surfaces de la bague d'étanchéité en contact mutuel sont à l'intérieur des parties où sont situées les moyens de mise en prise (24, 26) qui peuvent, au stade initial de l'introduction de l'extrémité d'about mâle dans l'about femelle, être décalées l'une par rapport à l'autre dans une direction radiale afin de déplacer les moyens de mise en prise (24, 26) pour les séparer l'un de l'autre.

8. Dispositif selon la revendication 7, dans lequel les moyens de mise en prise (24, 26) sont situés au niveau des surfaces intérieures venant en contact mutuel d'une poche (10) formée par une peau glissante (8), caractérisé en ce que les moyens de mise en prise (24, 26) peuvent être séparés l'un de l'autre par déviation de la peau glissante (8) quand l'extrémité d'about mâle est introduite dans l'about femelle.
